**Europäisches Patentamt**

**European Patent Office**

**Office européen des brevets**

(11) Veröffentlichungsnummer: **0 499 964 A1**

# EUROPÄISCHE PATENTANMELDUNG

(21) Anmeldenummer: **92102372.7**

(22) Anmeldetag: **13.02.92**

(51) Int. Cl.5: **A21C 3/08**

(30) Priorität: **20.02.91 DE 4105254**

(43) Veröffentlichungstag der Anmeldung:
**26.08.92 Patentblatt 92/35**

(84) Benannte Vertragsstaaten:
**AT BE CH DK ES FR GB LI LU NL**

(71) Anmelder: **BREZELBÄCKEREI DITSCH GmbH**
**Robert-Bosch-Strasse 44**
**W-6500 Mainz-Hechtsheim(DE)**

(72) Erfinder: **Kotter, Manfred**
**Carl-Zeiss-Strasse 26**
**W-6500 Mainz-Hechtsheim(DE)**
Erfinder: **Theimert, Paul-Heinz, Prof. Dr.-Ing.**
**Vor der Grube 12 D**
**W-6108 Weiterstadt 1(DE)**

(74) Vertreter: **Ouermann, Helmut, Dipl.-Ing.**
**Postfach 6145 Gustav-Freytag-Strasse 25**
**W-6200 Wiesbaden(DE)**

(54) **Vorrichtung zum Schlingen eines Brezels aus einem geraden Teigstrang definierter Länge.**

(57) Die Erfindung schlägt eine Vorrichtung zum Schlingen eines Brezels (39) aus einem geraden Teigstrang definierter Länge vor. Sie weist eine Unterlage (21, 26, 27) zur Aufnahme des Teigstrangs auf, wobei ein Abschnitt (21) der Unterlage aus einer im wesentlichen horizontalen Lage anhebbar ist. Oberhalb des Abschnitts der Unterlage ist ein zweiarmiger Hebel (9) angeordnet, der um eine vertikale Achse schwenkbar ist. Zwei einarmige Hebel (11, 12) sind mit den jeweiligen Hebelarmenden des zweiarmigen Hebels schwenkbar verbunden. Die freien Enden der einarmigen Hebel nehmen jeweils ein Greifelement (16) auf.

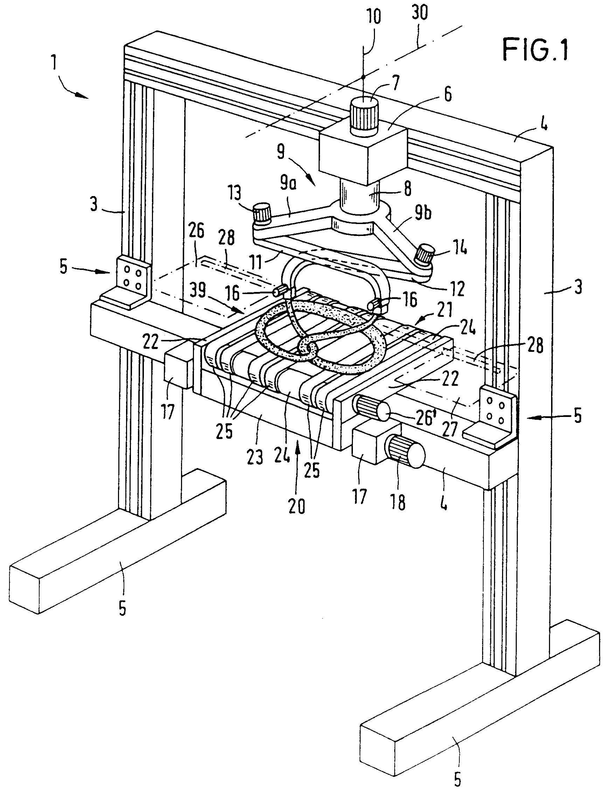

In voneinander wegbewegter Stellung der einarmigen Hebel greifen diese die beiden Enden des Teigstranges (29), anschließend werden die einarmigen Hebel nacheinander in deren Endstellung aufeinander zu bewegt und anschließend erfolgt eine Schwenkbewegung des zweiarmigen Hebels um einen Winkel von etwa 180° (Figur 1). Schlußendlich wird der Abschnitt der Unterlage angehoben, so daß die freien Enden des Teigstranges in den Mittelbereich des geschlungenen Brezels (39) eingedrückt werden. Nach dem Lösen der Greifelemente und dem Absenken des Abschnittes der Unterlage kann der fertig geschlungene Brezel abgefördert werden.

FIG.1

EP 0 499 964 A1

Die Erfindung betrifft eine Vorrichtung zum Schlingen eines Brezels aus einem geraden Teigstrang definierter Länge.

Aus der US-PS 2 629 340 ist eine Vorrichtung bekannt, die dem Schlingen eines Brezels aus einem geraden Teigstrang definierter Länge dient. Der Vorrichtung werden zwischen zwei Transportbändern gerade Teigstränge zugefördert, die über ihre Stranglänge einen konstanten Querschnitt aufweisen. Es ist eine Aufnahme für den geraden Teigstrang vorgesehen, mit erhabenen Elementen, um die der Teigstrang nach dem Ergreifen der Strangenden mittels zweier Greifer zur Bildung des Brezels gelegt wird. Die die Schlingbewegung des Teigstranges vollführenden Greifer werden über eine geometrisch kompliziert gestaltete Kurve angesteuert, derart, daß sie sowohl eine Bewegung in horizontaler als auch in vertikaler Richtung, wobei diese Bewegungen durchaus auch überlagert sind, vollführen. So zieht zunächst der eine Greifer die eine Hälfte des Teigstranges, nachfolgend der Einfachheit halber erste Teigstranghälfte genannt, entlang eines Bogens in Richtung der horizontalen Symmetrieachse des geraden Teigstranges und hebt dabei diese erste Teigstranghälfte an. Während dieses Bewegungsablaufes bewegt der zweite Greifer die andere Hälfte des Teigstranges, nachfolgend der Einfachheit halber als zweite Teigstranghälfte bezeichnet, in einem Bogen bei gleichzeitiger Hubbewegung unter die erste Teigstranghälfte, so daß sich die beiden Teigstranghälften in ihren Endbereichen überlappen. Es zieht dann der der zweiten Teigstranghälfte zugeordnete Greifer das Ende der zweiten Teigstranghälfte in Richtung der Teigstrangmitte, wobei die erste Teigstranghälfte in Richtung der Teigstrangmitte zur Bildung eines brezelförmigen Ovals gezogen wird. Schließlich legt der das Ende der zweiten Teigstranghälfte haltende Greifer dieses Ende entsprechend der gewünschten Brezelform in dem Bereich des Teigstranges ab, der dem Berührungsbereich der beiden Teigstranghälften gegenüberliegt. Der die erste Teigstranghälfte erfassende Greifer wird so bewegt, daß sich die erste Teigstranghälfte über die zweite Teigstranghälfte legt, womit im Berührungspunkt der beiden Teigstranghälften die Schlingung erfolgt. Das Ende der ersten Teigstranghälfte wird entsprechend mittels des diesem Ende zugeordneten Greifers auf dem Mittelbereich des Teigstranges abgelegt. Nachdem so der Brezel aus dem Teigstrang geschlungen und die Strangenden auf den Mittelbereich des Teigstranges abgelegt sind, werden über die Kurve zwei Stempel angesteuert, die sich auf die Enden der Teigstranghälften absenken und diese in die zugeordneten Mittelbereiche des Teigstranges eindrücken, so daß eine Verbindung zwischen den beiden Enden und den Mittelbereichen des Teigstranges erfolgt.

Aus der DE 17 82 289 B2 ist eine Vorrichtung bekannt, die dem Schlingen eines Brezels aus einem in U-Form vorliegenden Teigstrang definierter Länge dient. Bei dieser Vorrichtung werden die Enden des U-förmigen Teigstranges mittels je eines an einem zugeordneten Hebel befestigten Greifers erfaßt. Die beiden einarmigen Hebel sind unabhängig voneinander um eine gemeinsame, senkrecht zur Ebene des Teigstranges angeordnete Achse um mindestens 180° schwenkbar sowie axial hin- und herbeweglich, das heißt die Greifer sind anhebbar- bzw. absenkbar. Während des gleichzeitig erfolgenden Schwenkens der Greifer wird der U-förmige Teigstrang zum fertigen Brezel geschlungen und am Ende der Schwenkbewegung werden die Teigstrangenden durch Absenken der Greifer auf das Mittelstück des Teigstranges abgesetzt. Die Hebel sind um eine gemeinsame Achse schwenkbar, wobei einer der Hebel mit einer Hohlwelle und der andere Hebel mit einer die Hohlwelle durchsetzenden Welle verbunden ist. Auf- und abbewegliche Niederhalter mit entsprechend der Brezelform und dem jeweiligen Durchmesser des Teigstranges angeordneten Krallen sichern die Lage des Teigstranges während des Schlingvorganges.

Aufgabe der vorliegenden Erfindung ist es, eine Vorrichtung zum Schlingen von Brezeln zu schaffen, die baulich besonders einfach gestaltet ist und auch zum Schlingen von Brezeln unterschiedlichen Strangquerschnittes geeignet ist.

Die Erfindung schlägt hierzu eine Vorrichtung vor, mit

- einer Unterlage zur Aufnahme des Teigstranges, wobei ein der Aufnahme des geschlungenen Brezels dienender Abschnitt der Unterlage aus einer im wesentlichen horizontalen Lage anhebbar ist,
- einem oberhalb des Abschnitts der Unterlage angeordneten, zweiarmigen Hebel, der um eine vertikale Achse schwenkbar ist, wobei sich das jeweilige freie Ende des zweiarmigen Hebels in einem Bogen in einer horizontalen Ebene bewegt,
- zwei einarmigen Hebeln, wobei jeweils ein Hebel mit einem Hebelarmende des zweiarmigen Hebelarms schwenkbar verbunden ist und im wesentlichen um eine aus der Vertikalen geneigte Achse schwenkbar ist, und im Bereich seines der Schwenkachse abgewandten Endes ein Greifelement aufnimmt,

wobei der zweiarmige Hebel zwischen einer Ausgangs- und einer Endstellung um einen Winkel von etwa 180° schwenkbar ist, sowie in beiden Stellungen symmetrisch zu der senkrecht zum geraden Teigstrang befindlichen Symmetrieachse angeordnet ist, wobei ferner die einarmigen Hebel zwischen einer Ausgangs- und einer Endstellung um einen solchen stumpfen Winkel aufeinander zu schwenkbar sind, daß sich deren überstrichene Winkelbereiche teilweise überschneiden, sowie in der Ausgangsstellung das freie Ende des jeweiligen einarmigen Hebels vom anderen einarmigen Hebel weggerichtet ist und das dem freien Ende zugeordnete Greifelement benachbart dem zugeordneten Ende des geraden Teigstranges positioniert ist und beim Überführen des jeweiligen einarmigen Hebels in seine Endstellung das zugeordnete Greifelement eine Hubbewegung vollführt.

Bei in Ausgangsstellung befindlichem zweiarmigem Hebel wird einer der einarmigen Hebel aus seiner Ausgangsstellung in seine Endstellung bewegt, wobei das vom Greifelement erfaßte Ende der ersten Teigstranghälfte im Bogen bewegt wird und dabei wegen der aus der vertikalen geneigten Schwenkachse des einarmigen Hebels von der Unterlage angehoben wird. Während oder nach der Schwenkbewegung des die erste Teigstranghälfte bewegenden einarmigen Hebels wird der andere einarmige Hebel verschwenkt, entsprechend vollführt das Ende der zweiten Teigstranghälfte eine Bewegung entlang eines Bogens in Richtung der anderen Teigstranghälfte und wird dabei gleichfalls von der Unterlage abgehoben. Die Geometrie ist dabei so bemessen, daß die beiden einarmigen Hebel nicht miteinander kollidieren. Es wird als bevorzugt angesehen, wenn die zweite Teigstranghälfte unterhalb der ersten Teigstranghälfte hindurchgeführt wird, wobei sich die weitgehend entsprechend dem Oval des Brezels darstellenden Teigstranghälften in der Endstellung der beiden einarmigen Hebel im Überlappungsbereich berühren. Sobald die beiden einarmigen Hebel deren Endstellung erreicht haben, wird der zweiarmige Hebel um etwa 180° geschwenkt, womit die bisher nur übereinanderliegenden Teigstranghälften im Überlappungsbereich miteinander verschlungen werden. Nachdem der zweiarmige Hebel seine Endstellung erreicht hat, befinden sich die beiden Greifer und damit auch die beiden Enden des Teigstranges beabstandet zum Oval des Brezels. Um die Enden des Teigstranges mit den Mittenbereichen des Ovals zu verbinden, ist nun vorgesehen, daß zumindest derjenige Abschnitt der Unterlage, der der Aufnahme des geschlungenen Brezels dient, aus seiner im wesentlichen horizontalen Lage anhebbar ist. In der angehobenen Endstellung drücken die Greifelemente die Enden des Teigstranges in dessen Mittenbereiche. Nachdem der Brezel so geschlungen und die Teigstrangenden mit dem Teigstrang verbunden sind, können die Greifelemente geöffnet und die Unterlage in ihrer Ausgangsstellung zurückbewegt werden, sodann der fertig geschlungene Brezel aus der Vorrichtung entnommen werden.

Die Vorrichtung zeichnet sich somit durch eine äußerst einfache Gestaltung der Bauelemente, nämlich der Unterlage, des zweiarmigen Hebels und der beiden einarmigen Hebel mit den Greifelementen aus, wobei aufgrund der kinematischen Verhältnisse ein einfaches und schnelles Schlingen des Brezels möglich ist.

Gemäß einer besonderen Ausführungsform der Erfindung ist vorgesehen, daß der zweiarmige Hebel und/oder jeder der beiden einarmigen Hebel mittels eines eigenen Motors schwenkbar sind. Hierdurch können die Bewegungen des zweiarmigen Hebels und jedes der beiden einarmigen Hebel unabhängig voneinander erfolgen. Vorteilhaft ist der jeweilige Motor als elektrischer Schwenkmotor ausgebildet, der in seinem Schwenkwinkel entsprechend dem des zweiarmigen bzw. der einarmigen Hebel begrenzt ist.

Zweckmäßig weist die Vorrichtung einen Grundrahmen auf, wobei mit einer horizontalen Strebe des Grundrahmens der Motor für den zweiarmigen Hebel verbunden ist, mit dessen vertikal gerichteter Antriebswelle der zweiarmige Hebel verbunden ist. Ferner ist vorgesehen, daß mit dem jeweiligen freien Ende des zweiarmigen Hebels der Motor zum Verschwenken des zugeordneten einarmigen Hebels verbunden ist, wobei dessen Antriebswelle aus der Vertikalen geneigt angeordnet und mit der Antriebswelle der einarmige Hebel verbunden ist.

Die Hubbewegung der Greifelemente läßt sich auf einfachste Art und Weise optimal darstellen, wenn die Arme des zweiarmigen Hebels, ausgehend von dessen Schwenkachse, um einen Winkel von etwa 15° aus der Horizontalen nach unten geneigt sind und die Antriebswelle des die Schwenkbewegung des jeweiligen einarmigen Hebels bewerkstelligenden Motors senkrecht zum zugeordneten Arm des zweiarmigen Hebels angeordnet ist, sowie der zugeordnete einarmige Hebel, ausgehend von dessen Schwenkachse, um einen Winkel von etwa 15° aus der Horizontalen nach unten geneigt ist.

Vorteilhaft ist das jeweilige Greifelement als Greifzange ausgebildet, deren Zangenöffnung im wesentlichen nach unten gerichtet ist. Die Anordnung der Zangenöffnung gestattet es, das jeweilige Ende des gerade positionierten Teigstranges einfach zu greifen und auch dieses Ende nach dem Schlingen des Brezels in den Mittenbereich des Teigstranges einzudrücken.

Besonders einfache kinematische Verhältnisse beim Schlingen des Brezels ergeben sich, wenn die beiden Arme des zweiarmigen Hebels nicht unter einem Winkel von 180°, sondern einem solchen von etwa 120° zueinander angeordnet sind. In diesem Fall erfolgt bei in Ausgangsstellung befindlichem zweiarmigem Hebel vorteilhaft das Überlappen der beiden Teigstranghälften im V-Sektor des Hebels, so daß nach dem Überführen des zweiarmigen Hebels in dessen Endstellung die geschlungenen Teigstranghälften mit ihren Strangenden von der einen Ovalhälfte in die andere Ovalhälfte bewegt werden. Bei einer solchen Ausbildung sollte der jeweilige einarmige Hebel relativ zum zugeordneten Hebelarmende des zweiarmigen Hebels um einen Winkel von etwa 160° schwenkbar sein. Zweckmäßig wird der Schwenkbereich des jeweiligen einarmigen Hebels in seiner Ausgangs- und/oder Endstellung durch einen zwischen diesem Hebel und dem zweiarmigen Hebel wirksamen Anschlag begrenzt.

Eine besondere Ausführungsform der Erfindung sieht vor, daß der hebbare, der Aufnahme des geschlungenen Brezels dienende Abschnitt der Unterlage um eine parallel zum geraden Teigstrang angeordnete Achse schwenkbar ist. Bei nach dem Überführen der einarmigen Hebel sowie des zweiarmigen Hebels in deren jeweilige Endstellung erfolgenden Hochschwenken des Abschnittes der Unterlage von dessen im wesentlichen horizontaler Ausgangsstellung in dessen Endstellung werden so die von den beiden Greifelementen ergriffenen Teigstrangenden in den diesen zugeordneten Mittelabschnitt des geschlungenen Teigstrangs gedrückt. Um den geschlungenen Brezel dem weiteren Herstellungsprozeß zuführen zu können ist vorgesehen, daß der Abschnitt der Unterlage als Förderband ausgebildet ist, dessen Förderrichtung senkrecht zur Erstreckung des geraden Teigstrangs gerichtet ist. Das Förderband besteht zweckmäßig aus einzelnen, beabstandet zueinander angeordneten Treibriemen, wobei entsprechend Innenkonturabschnitten des geschlungenen Brezels angeordnete Anlegemarken aus einer Ausgangsstellung unterhalb des Förderniveaus des Förderbandes in eine Endstellung oberhalb des Förderniveaus zwischen die Treibriemen verfahrbar sind. Beim Schlingen des Brezels, das heißt ausgehend von dem geraden Teigstrang dienen die Anlegemarken der Führung der Teigstranghälften, nachdem der Brezel fertig geschlungen ist werden die Anlegemarken unter das Förderniveau des Förderbandes abgesenkt, so daß der Brezel mittels des Förderbandes abgefördert werden kann.

Die Erfindung schlägt damit eine besonders einfach gebaute Vorrichtung zum Schlingen eines Brezels aus einem geraden Teigstrang definierter Länge vor, wobei dieser Teigstrang durchaus unterschiedliche Dicke aufweisen kann.

Weitere Merkmale der Erfindung sind in der Figurenbeschreibung und den Patentansprüchen dargestellt, wobei bemerkt wird, daß alle Merkmale und Kombinationen von Merkmalen erfindungswesentlich sind.

In den Figuren ist die Erfindung anhand einer Ausführungsform dargestellt, ohne auf diese beschränkt zu sein. Es zeigt in schematischer Darstellung:

Figur 1
eine räumliche Ansicht der erfindungsgemäßen Vorrichtung während des Schlingens eines Brezels bei in Endstellung befindlichem zweiarmigen Hebel und in Endstellung befindlichen einarmigen Hebeln sowie nicht angehobenem Abschnitt der Unterlagen,

Figur 2
eine Seitenansicht der für die Darstellung der kinematischen Verhältnisse der Vorrichtung relevanten Bauteile, gezeigt bei in Ausgangsstellung befindlichem zweiarmigem Hebel und den beiden in Ausgangsstellung befindlichen einarmigen Hebeln,

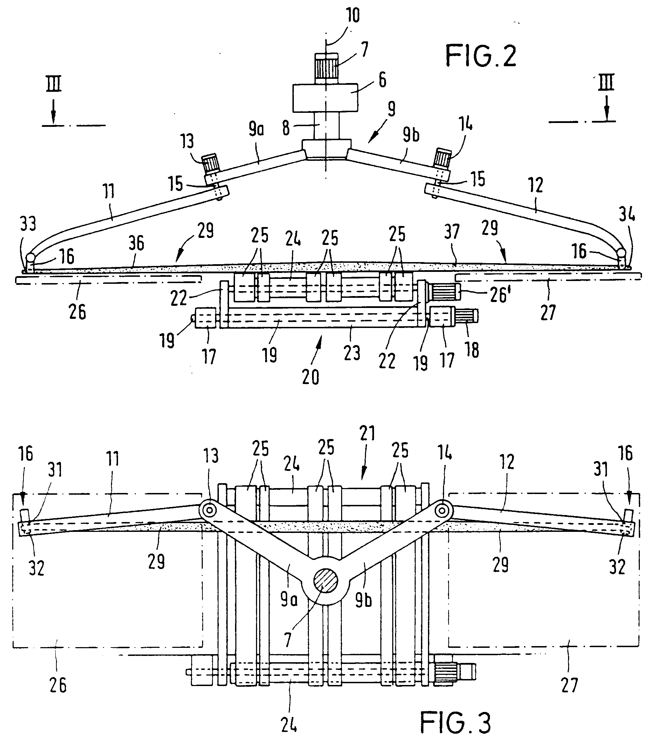

Figur 3
eine Ansicht in Richtung III-III gemäß Figur 2 gesehen,

Figur 4
eine Seitenansicht gemäß Figur 2, wobei jedoch der der ersten Teigstranghälfte zugeordnete erste einarmige Hebel sich in seiner Endstellung befindet,

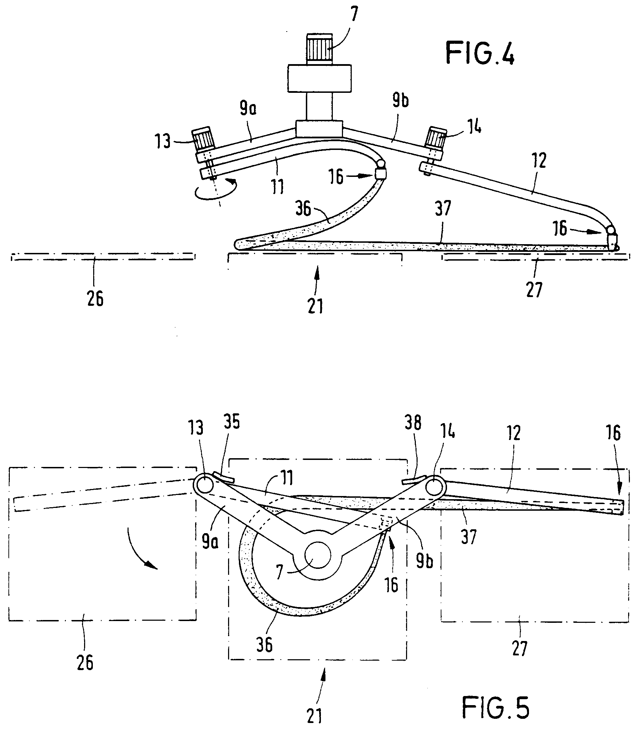

Figur 5
eine Draufsicht des Zustandes nach Figur 4, entsprechend der Darstellung in Figur 3 verdeutlicht,

Figur 6
eine Seitenansicht gemäß Figur 4, wobei jedoch der der zweiten Teigstranghälfte zugeordnete zweite einarmige Hebel sich in seiner Endstellung befindet,

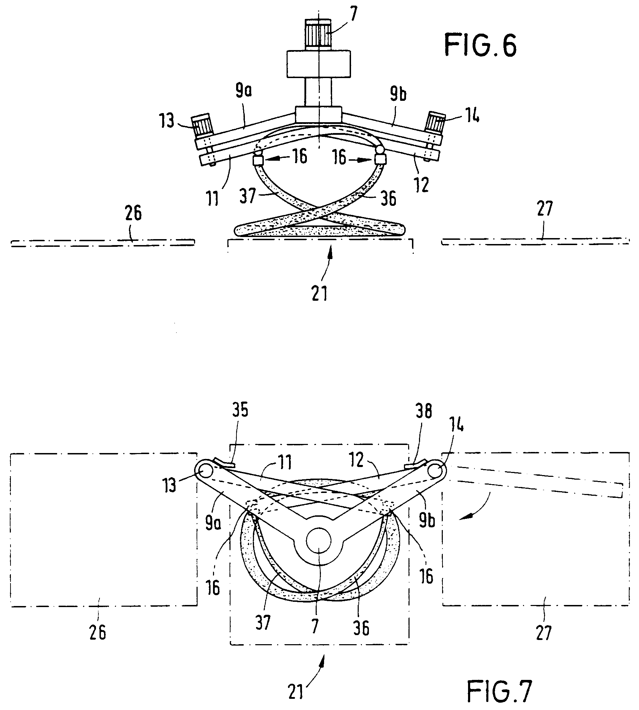

Figur 7
eine Draufsicht des Zustands nach Figur 6, entsprechend der Darstellung nach Figur 3 verdeutlicht,

Figuren 8, 9 und 10
Draufsichten des Zustands beim Überführen des zweiarmigen Hebels in seine Endstellung, verdeutlicht bei einem Schwenkwinkel aus der Ausgangsstellung um 60° (Figur 8), um 120° (Figur 9) und um 180° (Endstellung gemäß Figur 10),

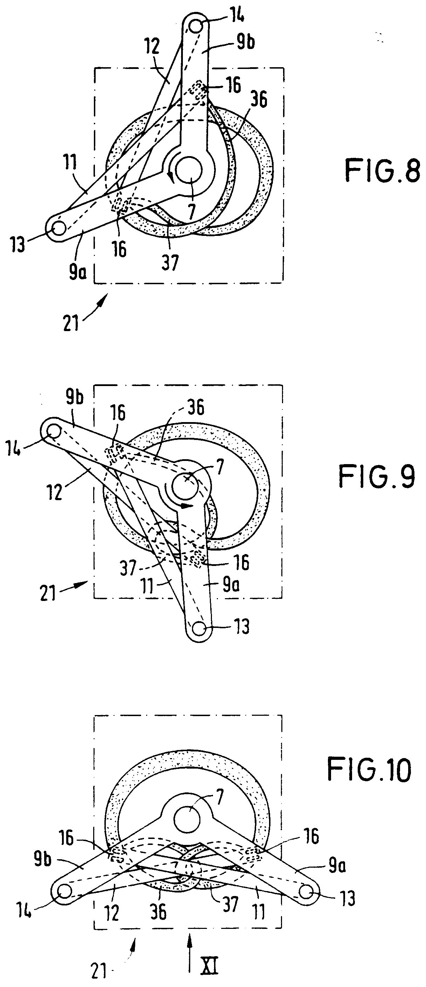

Figur 11
eine Seitenansicht bei in Endstellung befindlichen einarmigen Hebeln und in Endstellung befindlichem zweiarmigem Hebel gemäß Pfeil XI in Figur 10,

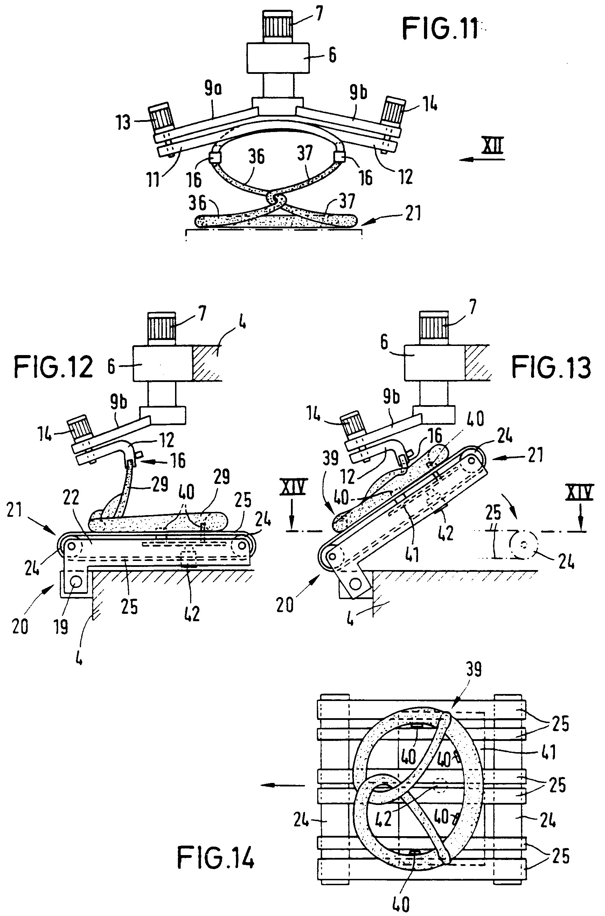

Figur 12
eine Seitenansicht gemäß Pfeil XII in Figur 11 mit einer detaillierteren Darstellung des als Förderband ausgebildeten Abschnittes der Unterlage, gezeigt in nicht angehobener Stellung dieses Abschnittes,

Figur 13
eine Darstellung gemäß Figur 12, jedoch bei angehobenem, das heißt hochgeschwenktem Förderband und

Figur 14

eine Draufsicht des auf dem Förderband aufliegenden geschlungenen Brezels, wobei dieser Darstellung die eingeschwenkte Stellung des Förderbandes zugrundegelegt ist.

Die in Figur 1 schematisch dargestellte Vorrichtung zum Schlingen eines Brezels weist einen Grundrahmen 1 auf, der durch zwei parallel zueinander angeordnete Fußstreben 2, zwei mit diesen verbundene, sich vertikal zu diesen erstreckende Streben 3 und zwei parallel zueinander beabstandet angeordnete, mit den Streben 3 verbundene, horizontal angeordnete Streben 4 gebildet ist. Während die obere Strebe 4 in der Ebene der Streben 3 auf diesen aufliegt, ist die untere Strebe 4 seitlich der beiden Streben 3 angeordnet und mit diesen über zwei Winkeleisen 5 verbunden. Auf der halben Länge der oberen Strebe 4 ist oberhalb der unteren Strebe 4 ein quaderförmiger Lagerflansch 6 mit der oberen Strebe 4 befestigt. Ein elektrischer Schwenkmotor 7 ist mit dem Lagerflansch 6 verbunden, mit dem unteren freien Ende der vertikal gerichteten Antriebswelle 8 des elektrischen Schwenkmotors 7 ist ein zweiarmiger Hebel 9 fest verbunden. Dessen beide Hebelarme 9a und 9b sind von der durch die Streben 3 und die obere Strebe 4 gebildeten Ebene weggerichtet und schließen einen Winkel von 120° miteinander ein. Darüber hinaus sind die Hebelarme 9a und 9b, ausgehend von der Schwenkachse 10 des zweiarmigen Hebels 9, um einen Winkel von etwa 15° aus der Horizontalen nach unten geneigt (siehe beispielsweise Figur 2). Die beiden Hebelarme 9a und 9b des Hebels 9 sind symmetrisch zu einer durch die Schwenkachse 10 und die senkrecht zu dieser verlaufenden, horizontal orientierten Achse 30 gebildeten Ebene angeordnet, so daß die freien Enden der Hebelarme 9a und 9b bei einer Schwenkbewegung des Hebels 9 in einer gemeinsamen horizontalen Ebene bewegt werden.

Wie die Figur 1 verdeutlicht, sind ferner zwei einarmige Hebel 11 und 12 vorgesehen, wobei jeweils ein Hebel 11 bzw. 12 mit dem Ende des Hebelarms 9a bzw. 9b schwenkbar verbunden ist. Die schwenkbare Verbindung erfolgt mittels jeweils eines elektrischen Schwenkmotores 13 bzw. 14, der mit dem freien Ende des Hebelarmes 9a bzw. 9b verbunden ist, wobei dessen Antriebswelle 15 (siehe beispielsweise Figur 2) aus der Vertikalen geneigt angeordnet und mit der Antriebswelle 15 der jeweilige einarmige Hebel 11 bzw. 12 fest verbunden ist. Im Bereich seines freien Endes nimmt der jeweilige Hebel 11 bzw. 12 eine Greifzange 16 auf (siehe beispielsweise Figur 2) deren beide Zangenbacken 31 bzw. 32 in nicht näher dargestellter Art und Weise beispielsweise pneumatisch bewegbar sind. Die durch die jeweiligen beiden Zangenbacken 31, 32 gebildete Zangenöffnung ist im wesentlichen nach unten gerichtet.

Wie beispielsweise der Darstellung der Figur 2 zu entnehmen ist, sind die Hebel 11 und 12 parallel zu den Hebelarmen 9a bzw. 9b des zweiarmigen Hebels 9 orientiert. Damit sind die Hebel 11 und 12, bezogen auf deren in Figur 2 gezeigte Ausgangsstellung, von deren Schwenkpunkt gesehen um einen Winkel von 15° aus der Horizontalen nach unten geneigt.

Vor der unteren Strebe 4 sind zwei mit dieser fest verbundene, beabstandet zueinander angeordnete Lagerflansche 17 befestigt. Mit einem der Lagerflansche 17 ist ein weiterer elektrischer Schwenkmotor 18 verbunden, dessen parallel zur unteren Strebe 4 orientierte Anriebswelle 19 (siehe beispielsweise Figur 2) auch im gegenüberliegenden Lagerflansch 17 gelagert ist. Zwischen den beabstandet zueinander angeordneten Lagerflanschen 17 ist der Rahmen 20 eines Förderbandes angeordnet, wobei die Antriebswelle 19 des Schwenkmotores 18 den Rahmen 20 drehfest aufnimmt. Der Rahmen 20 weist zwei L-förmigen Seitenplatten 22 auf, die mittels zweier Stege 23, von denen nur einer gezeigt ist, verbunden sind. Die drehfeste Verbindung der Antriebswelle 19 mit dem Rahmen 20 erfolgt im Bereich des kurzen Schenkels der L-förmigen Seitenplatten 22. Zwischen den beiden langen Schenkeln der Seitenplatten 22 sind zwei Walzen 24 drehbar gelagert, die ein Förderband aufnehmen, das aus einzelnen, beabstandet zueinander angeordneten Treibriemen 25 gebildet ist.

Die dem Schwenkmotor 18 nächstliegende Walze 24 ist mittels eines weiteren elektrischen Schwenkmotors 26' antreibbar, der mit dem langen Abschnitt einer Seitenplatte 22 fest verbunden ist. In der in Figur 1 gezeigten, nicht angehobenen, das heißt nicht ausgeschwenkten Position des Rahmens 20 liegt die Förderebene der Treibriemen 25 horizontal.

Wie der Darstellung der Figur 1 zu entnehmen ist, erstrecken sich die Treibriemen 25 oberhalb der unteren Strebe 4 in dem Raum zwischen der oberen Strebe 4 und den beiden seitlichen Streben 3. Oberhalb des Rahmens 20 ist der zweiarmige Hebel 9 angeordnet, dessen Schwenkachse 10 mit der Symmetrieebene des Rahmens 20 bzw. des Förderbandes 21 zusammenfällt. Das Förderband 21 bildet einen Abschnitt einer Unterlage zur Aufnahme eines Teigstranges, zwei weitere Abschnitte der Unterlage sind durch die Tischteile 26 und 27 beidseits des Förderbandes 11 gebildet. Die Tischteile 26 und 27 befinden sich zwischen dem Förderband 21 und den seitlichen Streben 3, sie erstrecken sich darüber hinaus von der unteren Strebe 4 weg. In diesem, der unteren Strebe 4 abgewandten Bereich weist jedes Tischteil 26 bzw. 27 eine parallel zur Strebe 4 angeordnete Längsrille geringer Tiefe auf, deren Aufnahmeniveau mit der Förderebene der Treibriemen 25 übereinstimmt.

Die insoweit anhand der Darstellung der Figur 1 und ergänzend anhand der Figuren 2 und 3 beschriebene Vorrichtung dient dem Schlingen eines Brezels aus einem geraden Teigstrang 29, der aus einer Maschine in die Längsrillen 28 der Tischteile 26 und 27 und zwischen diesen auf die Treibriemen 25 abgelegt wird. Wie bei üblichen, sonst handgefertigten Laugen-Brezeln weist der Teigstrang 29 im Mittelabschnitt einen größeren Querschnitt auf als in den Endbereichen, so wie es in der Figur 1 für den teilweise geschlungenen Brezel verdeutlicht ist. Der Abstand der einander abgewandten Enden der Längsrillen 28 gibt dabei die maximale Teigstranglänge vor.

Der Vorgang zum Schlingen eines Brezels sei nun anhand der Darstellung der Figuren 2 bis 14 näher verdeutlicht:

Die Figuren 2 und 3 zeigen den geraden Teigstrang 29, der auf dem in nicht angehobener Stellung befindlichem Förderband 21 und den Tischteilen 26 und 27 aufliegt, konkret in die Längsrillen 28 der Tischteile 26 und 27 eingelegt ist, so daß eine definierte Position des geraden Teigstranges 29 vorgegeben ist. Der zweiarmige Hebel 9 befindet sich in seiner Ausgangsstellung, wie sie in Figur 1 verdeutlicht ist, ferner befinden sich die beiden einarmigen Hebel 11 und 12 in ihren Ausgangsstellungen, in denen das freie Ende des jeweiligen Hebels 11 bzw. 12 vom anderen Hebel 12 bzw. 11 weggerichtet und geringfügig entgegen dem V-Sektor des zweiarmigen Hebels 9 überstreckt ist, beispielsweise um einen Winkel von 10°. In dieser Position sind die beiden Greiferzangen 16 pneumatisch so bewegt worden, daß deren nach unten gerichtete Backen 31 und 32 das freie Ende 33 bzw. 34 des geraden Teigstranges 29 klemmend erfassen.

Ausgehend von dieser in den Figuren 2 und 3 in einer Seitenansicht und in einer Draufsicht gezeigten Ausgangsstellung wird zunächst, wie der Darstellung der Figuren 4 und 5 zu entnehmen ist, der elektrische Schwenkmotor 13 aktiviert, der den Hebel 11 um einen Winkel von etwa 160° gegen einen am Hebelarm 9a des Hebels 9 angeordneten Anschlag 35 in dessen Endstellung bewegt. Infolge der aus der horizontalen geneigten Anordnung des Hebelarmes 9a und des Hebels 11 wird die Teigstranghälfte 36 hierdurch nicht nur entlang eines Bogens bewegt, sondern der Endbereich dieser Teigstranghälfte 36 auch angehoben.

Nachdem der Hebel 11 in seiner Endstellung überführt ist, wird der Hebel 12 entsprechend in seine Endstellung überführt, was in der Darstellung der Figuren 6 und 7 verdeutlicht ist. Hierzu wird der elektrische Schwenkmotor 14 aktiviert, der den Hebel 12 gegen einen weiteren Anschlag 38 am Hebel 9 bewegt. In der Endstellung der beiden Hebel 11 und 12 liegen die Endbereiche der Teigstranghälften 36 und 37 übereinander und berühren sich.

Nachdem die beiden Hebel 11 und 12 ihre Endstellungen erreicht haben, wird der elektrische Schwenkmotor 7 aktiviert und der zweiarmige Hebel 9 um einen Schwenkwinkel von 180° verschwenkt. Die Figuren 8, 9 und 10 verdeutlichen für den Mittelbereich der Figur 7 den weiteren Schlingprozeß des Brezels, wobei Figur 7 die Situation nach einer Schwenkbewegung des Hebels 9 um einen Winkel von 60° aus der Ausgangsstellung heraus darstellt, die Figur 9 einen Schwenkwinkel von 120° und die Figur 10 einen solchen von 180°, der gleichzeitig die Endstellung des Hebels 9 verdeutlicht. Die Seitenansicht des in Figur 10 gezeigten Zustandes nach der Darstellung in Figur 11 veranschaulicht, daß nach Erreichen der Endstellung des Hebels 9 die Greifzangen 16 beabstandet zur Förderebene des Förderbandes 21 angeordnet sind. Entsprechendes veranschaulicht auch die Seitenansicht gemäß Figur 12. Um nun die freien Enden des Teigstranges 29 in Eingriff mit den Mittelbereichen des Teigstranges, das heißt mit dem bereits etwas dickeren Bereich des Brezelovals zu bringen, wird, wie der Darstellung der Figur 13 zu entnehmen ist, das Förderband 21 durch Aktivierung des elektrischen Schwenkmotors 18 so weit um die Achse 19 hochgeklappt, bis die Greifer die beiden Enden des Teigstranges 29 in die Mittelbereiche des Brezelovals eindrücken. In der Stellung gemäß Figur 13 werden die Backen 31 und 32 der Greiferzangen 16 geöffnet und das Förderband 21 wieder in seine in Figur 12 gezeigte Position abgesenkt.

Die Figuren 12, 13 und 14 verdeutlichen in diesem Zusammenhang, daß entsprechend Innenkonturabschnitten des geschlungenen Brezels 39 angeordnete Anlegemarken 40 in einer Endstellung oberhalb des Förderniveaus der Treibriemen 25 zwischen diesen angeordnet sind und damit eine gleichbleibende Form der Brezel 39 beim Schlingen sicherstellen. Die Anlegemarken 40 sind mit einer unterhalb des oberen Trums der Treibriemen 25 angeordneten Platte 41 verbunden, die mittels eines Pneumatikzylinders 42 von diesem Trum weg nach unten bewegbar ist, so daß sich die Anlegemarken in ihrer Endstellung unterhalb des Förderniveaus der Treibriemen 25 befinden. Die fertig geschlungenen Brezel 29 können dann ohne Behinderung durch die Anlegemarken 40 abgefördert werden, wie es in der Darstellung der Figur 14 gezeigt ist.

Bezugszeichenliste

| 1 | Grundrahmen |
| 2 | Fußstreben |
| 3, 4 | Streben |
| 5 | Winkeleisen |
| 6 | Lagerflansch |
| 7 | elektrischer Schwenkmotor |
| 8 | Antriebswelle |
| 9 | zweiarmiger Hebel |
| 9a, 9b | Hebelarm |
| 10 | Schwenkachse |
| 11, 12 | einarmiger Hebel |
| 13, 14 | elektrischer Schwenkmotor |
| 15 | Antriebswelle |
| 16 | Greifzange |
| 17 | Lagerflansch |
| 18 | elektrischer Schwenkmotor |
| 19 | Antriebswelle |
| 20 | Rahmen |
| 21 | Förderband |
| 22 | Seitenplatte |
| 23 | Steg |
| 24 | Walze |
| 25 | Treibriemen |
| 26, 27 | Tischteil |
| 26' | Schwenkmotor |
| 28 | Längsrille |
| 29 | Teigstrang |
| 30 | Achse |
| 31, 32 | Backen |
| 33, 34 | freies Ende |
| 35 | Anschlag |
| 36, 37 | Teigstranghälfte |
| 38 | Anschlag |
| 39 | Brezel |
| 40 | Anlegemarke |
| 41 | Platte |
| 42 | Pneumatikzylinder |

**Patentansprüche**

1. Vorrichtung zum Schlingen eines Brezels (39) aus einem geraden Teigstrang (29) definierter Länge, mit
   - einer Unterlage (21, 26, 27) zur Aufnahme eines Teigstrangs (29), wobei ein der Aufnahme des geschlungenen Brezels (39) dienender Abschnitt (21) der Unterlage (21, 26, 27) aus einer im wesentlichen horizontalen Lage anhebbar ist,
   - einem oberhalb des Abschnitts (21) der Unterlage (21, 26, 27) angeordneten zweiarmigen Hebel (9), der um eine vertikale Achse (10) schwenkbar ist, wobei sich das jeweilige freie Ende des zweiarmigen Hebels (9) in einem Bogen in einer horizontalen Ebene bewegt,
   - zwei einarmigen Hebeln (11, 12), wobei jeweils ein Hebel (11; 12) mit einem Hebelarmende des zweiarmigen Hebelarms (9) schwenkbar verbunden ist und im wesentlichen um eine aus der Vertikalen geneigte Achse (15) schwenkbar ist und im Bereich seines der Schwenkachse (15) abgewandten Endes ein Greifelement (16) aufnimmt,

wobei der zweiarmige Hebel (9) zwischen einer Ausgangs- und einer Endstellung um einen Winkel von etwa 180° schwenkbar ist, sowie in beiden Stellungen symmetrisch zu der senkrecht zum geraden Teigstrang (29) befindlichen Symmetrieachse (10) angeordnet ist,

wobei ferner die einarmigen Hebel (11, 12) zwischen einer Ausgangs- und einer Endstellung um einen solchen stumpfen Winkel aufeinander zu schwenkbar sind, daß sich deren überstrichene Winkelbereiche teilweise überschneiden, sowie in der Ausgangsstellung das freie Ende des jeweiligen einarmigen Hebels (11; 12) vom anderen einarmigen Hebel (12; 11) weggerichtet ist und das dem freien Ende zugeordnete Greifelement (16) benachbart dem zugeordneten Ende des geraden Teigstrangs (29) positioniert ist und beim Überführen des jeweiligen einarmigen Hebels (11; 12) in seine Endstellung das zugeordnete Greifelement (16) eine Hubbewegung vollführt.

2. Vorrichtung nach Anspruch 1, **dadurch gekennzeichnet**, daß der zweiarmige Hebel (9) und/oder jeder der beiden einarmigen Hebel (11, 12) mittels eines eigenen Motors (7, 13, 14) schwenkbar sind.

3. Vorrichtung nach Anspruch 2, **dadurch gekennzeichnet**, daß der jeweilige Motor (7, 13, 14) als elektrischer Schwenkmotor ausgebildet ist, der in seinem Schwenkwinkel entsprechend dem des zweiarmigen (9) bzw. der einarmigen Hebel (11, 12) begrenzt ist.

4. Vorrichtung nach Anspruch 2 oder 3, **dadurch gekennzeichnet**, daß sie einen Grundrahmen (1) aufweist, wobei mit einer horizontalen Strebe (4) des Grundrahmens (1) der Motor (7) für den zweiarmigen Hebel (9) verbunden ist, mit dessen vertikal gerichteter Antriebswelle (8) der zweiarmige Hebel (9) verbunden ist.

5. Vorrichtung nach einem der Ansprüche 2 bis 4, **dadurch gekennzeichnet**, daß mit dem jeweiligen freien Ende des zweiarmigen Hebels (9) der Motor (13; 14) zum Verschwenken des zugeordneten einarmigen Hebels (11; 12) verbunden ist, wobei dessen Antriebswelle (15) aus der Vertikalen geneigt angeordnet und mit der Antriebswelle (15) der einarmige Hebel (11, 12) verbunden ist.

6. Vorrichtung nach einem der Ansprüche 1 bis 5, **dadurch gekennzeichnet**, daß die Arme (9a, 9b) des zweiarmigen Hebels (9), ausgehend von dessen Schwenkachse (8), um einen Winkel von etwa 15° aus der Horizontalen nach unten geneigt sind und die Antriebswelle (15) des die Schwenkbewegung des jeweiligen einarmigen Hebels (11; 12) bewerkstelligenden Motors (13; 14) senkrecht zum zugeordneten Arm (9a; 9b) des zweiarmigen Hebels (9) angeordnet ist, sowie der zugeordnete einarmige Hebel (11; 12) ausgehend von dessen Schwenkachse (15), um einen Winkel von etwa 15° aus der Horizontalen nach unten geneigt ist.

7. Vorrichtung nach einem der Ansprüche 1 bis 6, **dadurch gekennzeichnet**, daß die beiden Arme (9a, 9b) des zweiarmigen Hebels (9) einen Winkel von etwa 120° miteinander einschließen.

8. Vorrichtung nach einem der Ansprüche 1 bis 7, **dadurch gekennzeichnet**, daß das jeweilige Greifelement als Greifzange (16) ausgebildet ist, deren Zangenöffnung im wesentlichen nach unten gerichtet ist.

9. Vorrichtung nach Anspruch 8, **dadurch gekennzeichnet**, daß die Greifzange (16) pneumatisch betätigbar ist.

10. Vorrichtung nach einem der Ansprüche 1 bis 9, **dadurch gekennzeichnet**, daß der jeweilige einarmige Hebel (11; 12) relativ zum zugeordneten Hebelarmende (9a; 9b) des zweiarmigen Hebels (9) um einen Winkel von etwa 160° schwenkbar ist.

11. Vorrichtung nach einem der Ansprüche 1 bis 10, **dadurch gekennzeichnet**, daß der Schwenkbereich des jeweiligen einarmigen Hebels (11; 12) in seiner Ausgangs- und/oder Endstellung durch einen zwischen diesem Hebel (11; 12) und dem zweiarmigen Hebel (9) wirksamen Anschlag (35; 38) begrenzt wird.

12. Vorrichtung nach einem der Ansprüche 1 bis 11, **dadurch gekennzeichnet**, daß der hebbare, der Aufnahme des geschlungenen Brezels (39) dienende Abschnitt (21) der Unterlage (21, 26, 27) um eine parallel zum geraden Teigstrang (29) angeordnete Achse (19) schwenkbar ist, derart, daß bei nach dem Überführen der einarmigen Hebel (11, 12) sowie des zweiarmigen Hebels (9) in deren jeweilige Endstellung erfolgendem Hochschwenken des Abschnitts (21) der Unterlage (21, 26, 27) von dessen im wesentlichen horizontaler Ausgangsstellung in dessen Endstellung die von den beiden Greifelementen (16) ergriffenen Enden des Teigstranges (29) in den diesen zugeordneten Mittelabschnitt des geschlungenen Teigstrangs (29) gedrückt werden.

13. Vorrichtung nach einem der Ansprüche 1 bis 12, **dadurch gekennzeichnet**, daß der Abschnitt der Unterlage (21, 26, 27) als Förderband (21) ausgebildet ist, dessen Förderrichtung senkrecht zur Erstreckung des geraden Teigstrangs (29) gerichtet ist.

14. Vorrichtung nach Anspruch 13, **dadurch gekennzeichnet**, daß das Förderband (21) aus einzelnen, beabstandet zueinander angeordneten Treibriemen (25) gebildet ist, wobei entsprechend Innenkonturabschnitten des geschlungenen Brezels (29) angeordnete Anlegemarken (40) aus einer Ausgangsstellung unterhalb des Förderniveaus des Förderbandes (21) in eine Endstellung oberhalb des Förderniveaus zwischen Treibriemen (25) verfahrbar sind.

FIG.1

FIG.2

FIG.3

FIG.4

FIG.5

FIG.6

FIG.7

FIG.8

FIG.9

FIG.10

FIG.11

FIG.12

FIG.13

FIG.14

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | CH-A-470 839 (B.T. RADAY)<br>--- | | A21C3/08 |
| A | BE-A-480 408 (P.A. VAN WELZEN) 15. März 1948<br><br>----- | | |

**RECHERCHIERTE SACHGEBIETE (Int. Cl.5)**

A21C

Der vorliegende Recherchenbericht wurde für alle Patentansprüche erstellt

| Recherchenort | Abschlußdatum der Recherche | Prüfer |
|---|---|---|
| DEN HAAG | 12 MAI 1992 | FRANKS N.M. |